# FASCICULE DE BREVET EUROPEEN

(11) **EP 3 558 712 B1**
(45) Date de publication et mention de la délivrance du brevet: **18.11.2020**
(21) Numéro de dépôt: 17832521.3
(22) Date de dépôt: 19.12.2017
(51) Int. Cl.: B60C 1/00, C08L 7/00, C08L 19/00

(54) **COMPOSITION DE CAOUTCHOUC COMPRENANT UNE POUDRETTE DE CAOUTCHOUC SPECIFIQUE**
GUMMIZUSAMMENSETZUNG MIT EINEM SPEZIFISCHEN GUMMIGRANULAT
RUBBER COMPOSITION COMPRISING A SPECIFIC CRUMB RUBBER

(30) Priorité: 20.12.2016 FR 1662877
(43) Date de publication de la demande: 30.10.2019
(73) Titulaire: Compagnie Générale des Etablissements Michelin, 63000 Clermont-Ferrand (FR)
(72) Inventeur: THOMASSON, Damien, 63040 Clermont-Ferrand Cedex 9 (FR); CUSCITO, Olivia, 63040 Clermont-Ferrand Cedex 9 (FR)
(74) Mandataire: Sidhu, Alban
(86) Numéro de dépôt international: PCT/FR2017/053698
(87) Numéro de publication internationale: WO 2018/115719

(56) Documents cités:
- EP-A1- 3 045 323
- JP-A- 2010 013 494
- US-A- 4 161 464

## Description

L'invention est relative aux compositions, notamment pour pneumatiques et plus particulièrement aux compositions comprenant une poudrette de caoutchouc.

En effet, il est intéressant aujourd'hui pour les industriels du pneumatique de trouver des solutions pour baisser les coûts des compositions de caoutchouc sans pénaliser les performances des pneumatiques utilisant ces compositions.

Il est connu dans l'état de l'art que les poudrettes de caoutchouc peuvent être utilisées en pneumatique. Par exemple, Le document US 2014/0228505 décrit l'utilisation d'une poudrette de caoutchouc d'une taille inférieure à 60 mesh (250 µm) dans des compositions pour pneumatique.

A présent, les Demanderesses ont montré que la composition propre des poudrettes utilisées a un impact sur les propriétés des compositions comprenant ces poudrettes de caoutchouc. En particulier, les Demanderesses ont trouvé un moyen d'obtenir d'excellentes propriétés de rigidité et de résistance à la déchirure dans des compositions comprenant des poudrettes spécifiques.

L'invention concerne donc une composition de caoutchouc à base d'au moins un élastomère, une charge renforçante, et un système de réticulation et une poudrette de caoutchouc, la poudrette de caoutchouc présentant un taux d'élastomère isoprénique supérieur à 80 pce dans la composition de la poudrette et la poudrette de caoutchouc présentant une fraction massique de noir de carbone allant de 31 à 35%.

L'invention concerne également un pneumatique comprenant une composition telle que définie ci-dessus, de préférence dans tout ou partie de sa bande de roulement.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition

Les compositions de caoutchouc selon l'invention sont à base d'au moins un élastomère, une charge renforçante, et un système de réticulation et une poudrette de caoutchouc, la poudrette de caoutchouc présentant un taux d'élastomère isoprénique supérieur à 80 pce dans la composition de la poudrette et la poudrette de caoutchouc présentant une fraction massique de noir de carbone allant de 31 à 35%.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Par ailleurs, le terme « pce », bien connu de l'homme de l'art, signifie au sens de la présente demande de brevet, partie en poids pour cent parties d'élastomères, au sens de la préparation de la composition avant cuisson. C'est-à-dire, dans le cas de la présence d'une poudrette de caoutchouc dans une composition, que le terme « pce » signifie partie en poids pour cent parties d'élastomères « neufs », excluant donc de la base 100 les élastomères contenus dans la poudrette de caoutchouc. Bien sûr, la poudrette elle-même présente une composition de caoutchouc dont les ingrédients peuvent également être exprimés en pce, le terme pce désignant dans ce cas la quantité en parties en poids pour cent parties d'élastomères, au sens de la composition propre de la poudrette.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type et notamment plus de 50% de préférence plus de 75%. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type.

Lorsqu'on fait référence à une unité (ou monomère) « majoritaire » au sein d'un même composé (ou polymère), on entend au sens de la présente invention, que cette unité (ou monomère) est majoritaire parmi les unités (ou monomères) formant le composé (ou polymère), c'est-à-dire que c'est celle qui représente la plus grande fraction, en masse parmi les unités (ou monomères) formant le composé (ou polymère). Ainsi, par exemple, une résine majoritairement composée d'unités cyclopentadiène est une résine dans laquelle les unités cyclopentadiène représentent la plus grande quantité en masse, parmi toutes les unités composant ladite résine. De la même manière, une résine majoritairement composée d'unités choisies dans le groupe constitué par le cyclopentadiène, le dicyclopentadiène, le méthylcyclopentadiène et les mélanges de ces derniers est une résine dans laquelle la somme des unités choisies dans le groupe constitué par le cyclopentadiène, le dicyclopentadiène, le méthylcyclopentadiène et les mélanges de ces derniers, représentent le plus grand nombre en masse parmi toutes les unités composant ladite résine. Dit autrement, un monomère « majoritaire » est un monomère qui représente la fraction massique la plus grande dans le polymère. Au contraire, un monomère « minoritaire » est un monomère qui ne représente pas la fraction molaire la plus grande dans le polymère.

Dans la présente demande, lorsqu'il est fait référence à un rapport des quantités d'un composé A et d'un composé B, ou un rapport entre le taux d'un composé A et le taux d'un composé B, il s'agit toujours du rapport au sens mathématique de la quantité de composé A sur la quantité de composé B.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### I-1 Elastomère

L'élastomère peut être choisi dans le groupe constitué par les élastomères diéniques et les mélanges de ces derniers.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Par fonction on entend ici préférentiellement un groupement chimique interactif avec la charge renforçante de la composition.

Préférentiellement, l'élastomère de la composition comprend majoritairement un élastomère diénique essentiellement insaturé. L'élastomère de la composition est de préférence choisi dans le groupe constitué par les polybutadiènes (en abrégé "BR"), les polyisoprènes de synthèse (IR) ou naturels (NR), les copolymères de butadiène, les copolymères d'isoprène et les mélanges de ces élastomères. De tels copolymères de butadiène et d'isoprène sont plus préférentiellement respectivement les copolymères de butadiène-styrène (SBR) et les copolymères d'isoprène-styrène (SIR).

Plus préférentiellement, l'élastomère majoritaire est choisi dans le groupe constitué par les polybutadiènes, les polyisoprènes naturels ou de synthèse et les mélanges de ces élastomères.

### I-2 Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge.

De préférence, le taux de charge renforçante est compris dans un domaine allant de 5 à 200 pce, de préférence de 20 à 160 pce.

Pour les besoins de l'invention, la charge renforçante est préférentiellement choisie dans le groupe constitué par les silices, les noirs de carbone et les mélanges de ces derniers. Plus préférentiellement, la charge renforçante est majoritairement du noir de carbone, de préférence à un taux compris dans un domaine allant de 30 à 90 pce. Préférentiellement également, la charge la charge renforçante est majoritairement de la silice, de préférence à un taux compris dans un domaine allant de 30 à 90 pce.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Evonik, les silices « Zeosil » 1165MP, 1135MP et 1115MP de la société Solvay, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16387. La silice a de préférence une surface BET comprise entre 45 et 400 m2/g, plus préférentiellement comprise entre 60 et 300 m2/g.

Ces compositions peuvent optionnellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

### I-3 Système de réticulation

Dans la composition de l'invention, on peut utiliser tout type de système de réticulation connu de l'homme du métier pour les compositions de caoutchouc.

De préférence, le système de réticulation est un système de vulcanisation, c'est-à-dire à base de soufre (ou d'un agent donneur de soufre) et d'un accélérateur primaire de vulcanisation. A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### I-4 Poudrette de caoutchouc

La composition de l'invention comporte également une poudrette de caoutchouc (en abrégé « poudrette » dans ce qui suit).

Les poudrettes se présentent sous la forme de granulés, éventuellement mis sous forme d'une plaque de caoutchouc. Le plus souvent les poudrettes de caoutchouc sont issues d'un broyage ou d'une micronisation de compositions de caoutchouc cuites déjà utilisées pour une première application, par exemple en pneumatique, elles sont un produit de recyclage des matériaux. De préférence les poudrettes se présentent sous la forme de microparticules.

Par « microparticules » on entend des particules qui présentent une taille, à savoir leur diamètre dans le cas de particules sphériques ou leur plus grande dimension dans le cas de particules anisométriques, de quelques dizaines ou centaines de microns.

Les poudrettes sont usuellement constituées d'une composition à base d'un élastomère et d'une charge. Elles comprennent également usuellement tous les ingrédients utilisés dans les compositions de caoutchouc tels que les plastifiants, les antioxydants, les additifs de vulcanisations etc.

Les poudrettes utiles pour l'invention ont un taux d'élastomère isoprénique supérieur à 80 pce dans la composition de la poudrette et présentent une fraction massique de noir de carbone allant de 31 à 35%.

De préférence, la poudrette de caoutchouc présente un taux d'élastomère isoprénique compris dans un domaine allant de 85 à 100 pce, de préférence de 90 à 100 pce dans la composition de la poudrette. Très préférentiellement, le taux d'élastomère isoprénique dans la poudrette est de 100 pce, c'est-à-dire que les élastomères isopréniques constituent l'ensemble des élastomères de la composition de la poudrette.

Au sens de la présente invention, on entend par élastomère isoprénique un homopolymère ou un copolymère issu majoritairement du monomère isoprène. Ainsi il peut s'agir notamment de polyisoprène de synthèse (IR), de caoutchouc naturel (NR) ou d'un copolymère d'isoprène tel qu'un copolymère isoprène-styrène (SIR).

Préférentiellement, l'élastomère isoprénique dans la poudrette de caoutchouc est choisi dans le groupe constitué par les polyisoprènes de synthèse, les caoutchoucs naturels et leurs mélanges. De préférence, l'élastomère isoprénique dans la poudrette de caoutchouc est un caoutchouc naturel.

Le taux d'élastomère isoprénique dans la composition de la poudrette peut être mesuré par RMN comme décrit ci-dessous.

Les poudrettes spécifiques comprenant taux d'élastomère isoprénique supérieur à 80 pce, peuvent être disponibles dans le commerce. Selon un mode de réalisation possible, on peut utiliser le recyclage de pneumatiques dont la composition est connue, de manière à s'assurer que la composition de la poudrette répond aux critères spécifiques pour l'invention. La poudrette elle-même, si elle n'est pas directement achetée dans le commerce, peut être obtenue selon les techniques connues de l'homme de l'art de broyage ou micronisation.

De manière préférentielle, la poudrette utile à l'invention comprend un élastomère diénique. Cet élastomère représente préférentiellement au moins 30% en masse, plus préférentiellement au moins 40% en masse, encore plus préférentiellement au moins 50% en masse du poids de la poudrette, pourcentage déterminé selon la norme ASTM E1131. Plus préférentiellement le taux molaire de motifs d'origine diénique (diènes conjugués) présent dans l'élastomère diénique est supérieur à 50%, de préférence entre 50% et 70%.

Selon un mode de réalisation préférentiel de l'invention, la poudrette contient entre 5 et 80% en masse de charge, plus préférentiellement entre 10% et 75%, et très préférentiellement entre 15% et 70%.

Par charge, on entend ici tout type de charge, qu'elle soit renforçante (typiquement à particules nanométriques, et préférentiellement de taille moyenne en poids inférieure à 500 nm, notamment entre 20 et 200 nm) ou qu'elle soit non-renforçante ou inerte (typiquement à particules micrométriques, et préférentiellement de taille moyenne en poids supérieure à 1 µm, par exemple entre 2 et 200 µm). La taille moyenne en poids des particules nanométriques est mesurée de manière bien connue de l'homme du métier (à titre d'exemple, selon la demande WO2009/083160 paragraphe I.1). La taille moyenne en poids des particules micrométriques peut être déterminée par tamisage mécanique.

A titre d'exemples de charges connues comme renforçantes par l'homme du métier, on citera notamment du noir de carbone ou une charge inorganique renforçante telle que la silice ou l'alumine en présence d'un agent de couplage, ou leurs mélanges.

On rappelle que pour l'invention, la poudrette de caoutchouc présente une fraction massique de noir de carbone allant de 31 à 35%. Le noir de carbone ou le mélange de noirs de carbone représente préférentiellement plus de 50%, plus préférentiellement plus de 80%, encore plus préférentiellement plus de 90% en masse du poids de la charge renforçante de la poudrette. Selon un mode de réalisation davantage préférentiel, la charge renforçante est constituée d'un noir de carbone ou d'un mélange de noirs de carbone.

Comme noirs de carbone conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique).

La poudrette peut contenir tous les autres additifs usuels qui entrent dans une composition de caoutchouc, notamment pour pneumatique. Parmi ces additifs usuels on peut citer les additifs de vulcanisation, les charges non renforçantes telles que la craie, le kaolin, les agents de protection. Ces additifs peuvent se trouver dans la poudrette aussi sous la forme de résidu ou de dérivé, puisqu'ils ont pu réagir au cours des étapes de fabrication de la composition ou de réticulation de la composition à partir de laquelle est issue la poudrette.

Concernant les constituants de la poudrette, on préfère pour les besoins de l'invention que la poudrette présente un extrait acétonique compris entre 3 et 30 % massique, plus préférentiellement compris dans un domaine allant de 5 à 25 % massique.

Egalement, il est préférable que la poudrette présente un extrait chloroformique compris entre 5 et 85% massique, plus préférentiellement compris dans un domaine allant de 5 à 50 % massique.

Les poudrettes peuvent être de simples broyats / micronisats de caoutchouc, sans autre traitement. Il est également connu que ces poudrettes peuvent subir un traitement afin de les modifier. Ce traitement peut consister à une modification chimique de fonctionnalisation ou de dévulcanisation. Il peut aussi s'agir d'un traitement thermomécanique, thermochimique, biologique...

Selon un premier mode de réalisation, préféré, de l'invention, il est possible d'utiliser une poudrette qui n'a pas subi de modification par traitement thermique et/ou mécanique, et/ou biologique et/ou chimique.

Selon ce premier mode de réalisation, on préfère que la poudrette présente un extrait acétonique compris entre 3 et 15 % massique, plus préférentiellement compris dans un domaine allant de 3 à 10 % massique. Egalement, on préfère que la poudrette présente un extrait chloroformique compris entre 3 et 20% massique, plus préférentiellement compris dans un domaine allant de 5 à 15 % massique. Préférentiellement, l'extrait chloroformique de la poudrette de caoutchouc présente une masse moléculaire moyenne en masse (Mw) inférieur à 10000 g/mol, de préférence inférieure à 8000 g/mol.

Selon le premier mode de réalisation, on préfère que le ratio de l'extrait chloroformique sur l'extrait acétonique, exprimés en pourcentage massique, soit inférieur à 1,5.

De préférence également selon ce premier mode de réalisation, la poudrette présente une taille moyenne de particules (D50) comprise entre 10 et 400 µm, préférentiellement entre 50 et 200 µm et plus préférentiellement entre 70 et 200 µm.

Selon un deuxième mode de réalisation de l'invention, il est possible d'utiliser une poudrette qui présente une morphologie modifiée par traitement thermique et/ou mécanique, et/ou biologique et/ou chimique.

Selon ce deuxième mode de réalisation, on préfère que la poudrette présente un extrait acétonique compris entre 5 et 20 % massique, plus préférentiellement compris dans un domaine allant de 10 à 18 % massique. Egalement, on préfère que la poudrette présente un extrait chloroformique compris entre 15 et 85% massique, plus préférentiellement compris dans un domaine allant de 15 à 50 % massique. Préférentiellement, l'extrait chloroformique de la poudrette de caoutchouc présente une masse moléculaire moyenne en masse (Mw) supérieure à 10000 g/mol, de préférence supérieure à 20000 g/mol et plus préférentiellement supérieure à 30000g/mol.

Selon le deuxième mode de réalisation, on préfère que le ratio de l'extrait chloroformique sur l'extrait acétonique, exprimés en pourcentage massique, soit supérieur ou égal à 1,5 ; de préférence supérieur à 2.

De préférence également selon ce deuxième mode de réalisation, la poudrette présente une viscosité Mooney (exprimée de manière conventionnelle en unité Mooney, UM) comprise entre 40 et 90, de préférence entre 45 et 75 et plus préférentiellement entre 50 et 70.

Le broyage peut être réalisé par différentes technologies, notamment les technologies de micronisation cryogénique à impact qui permettent l'obtention de particules de faible taille sur des matériaux caoutchouc. Des équipements commerciaux tels que les broyeurs CUM150 de la société Netzsch ou CW250 de la société Alpine peuvent être utilisés.

Préférentiellement, la poudrette est présente à un taux compris dans un domaine allant de 5% à 40% massique, préférentiellement de 10% à 30% et plus préférentiellement de 15 à 25%. Dans une composition type destinée au pneumatique ces taux massiques correspondent à des taux de 5 à 100 pce. En dessous de 5 pce l'économie réalisée ne serait pas assez importante ; tandis qu'au-dessus de 100 pce, il est possible que les propriétés de cohésion de la composition soient pénalisées. Ainsi, le taux de poudrette est de préférence compris dans un domaine allant de 10 à 90 pce, préférentiellement de 15 à 90 pce, plus préférentiellement de 20 à 80 pce, et très préférentiellement de 30 à 70 pce pour un fonctionnement optimum de l'invention.

### I-5 Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

La composition selon l'invention peut également comporter un système plastifiant. Ce système plastifiant peut être composé d'une résine hydrocarbonée de Tg supérieure à 20°C, en plus de la résine hydrocarbonée spécifique décrite précédemment, et/ou une huile plastifiante.

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 200°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la poudrette (et éventuellement les agents de couplage et/ou d'autres ingrédients à l'exception du système de réticulation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis pour pneumatiques. Ces produits peuvent ensuite être utilisés pour la fabrication de pneumatiques, selon les techniques connues de l'homme du métier, avec l'avantage de l'invention, à savoir un bon collant des couches les unes sur les autres avant cuisson du pneumatique.

La réticulation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

Les exemples qui suivent illustrent l'invention sans toutefois la limiter.

### III- Exemples de réalisation de l'invention

### III-1 Caractérisation des poudrettes et des compositions de caoutchouc des exemples

Dans les exemples, les poudrettes de caoutchouc sont caractérisées comme indiqué ci-après.

### Mesure de la taille des particules:

La taille des particules (notamment le D50) peut être mesurée par granulométrie laser de type mastersizer 3000 de la société Malverne. La mesure est réalisée en voie liquide, dilués dans l'alcool après un traitement préalable de 1min d'ultra-sons afin de garantir la dispersion des particules. La mesure est réalisée conformément à la norme ISO-13320-1.

### Mesure de l'extrait acétonique:

Le taux d'extrait acétonique est mesuré selon la norme ISO1407, au moyen d'un extracteur de type soxhlet.

Une prise d'essai d'échantillon (entre 500 mg et 5g) est introduite dans une cartouche d'extraction puis placée dans le tube extracteur du soxhlet. Un volume d'acétone égal à deux ou trois fois le volume du tube extracteur est placé dans le collecteur du soxhlet. Le soxhlet est ensuite assemblé puis mis à chauffer durant 16h.

L'échantillon est pesé après extraction. Le taux d'extrait acétonique correspond à la perte de masse de l'échantillon durant l'extraction, rapportée à sa masse initiale.

### Mesure de l'extrait chloroformique:

Le taux d'extrait chloroformique est mesuré selon la norme ISO1407, au moyen d'un extracteur de type soxhlet.

Une prise d'essai d'échantillon (entre 500 mg et 5g) est introduite dans une cartouche d'extraction puis placée dans le tube extracteur du soxhlet. Un volume de chloroforme égal à deux ou trois fois le volume du tube extracteur est placé dans le collecteur du soxhlet. Le soxhlet est ensuite assemblé puis mis à chauffer durant 16h.

L'échantillon est pesé après extraction. Le taux d'extrait chloroformique correspond à la perte de masse de l'échantillon durant l'extraction, rapportée à sa masse initiale.

### Mesure des masses moléculaires moyennes de l'extrait chloroformique:

Les masses moléculaires sont déterminées par chromatographie d'exclusion stérique, selon un étalonnage de Moore et selon la norme ISO16014.

La mesure de la masse moléculaire moyenne en poids (Mw) de l'extrait chloroformique est réalisée par chromatographie d'exclusion stérique (SEC) avec un détecteur à indice de réfraction (RI). Le système est composé d'une chaine Alliance 2695 de chez Waters, d'un four à colonne de chez Waters ainsi que d'un détecteur RI 410 de chez Waters. Le jeu de colonnes utilisé est composé de 2 colonnes PL GEL MIXED D (300 x 7,5 mm 5µm) suivies de 2 colonnes PL GEL MIXED E (300 x 7,5 mm 3µm) de la société Agilent. Ces colonnes sont placées dans un four à colonnes thermostaté à 35°C. La phase mobile utilisée est du tétrahydrofurane non antioxydé. Le débit de la phase mobile est de 1ml/min. Le détecteur RI est également thermostaté à 35°C.

L'extrait chloroformique est séché sous flux d'azote. L'extrait sec est ensuite repris à 1g/l dans le tétrahydrofurane non antioxydé à 250 ppm pendant 2 heures sous agitation. La solution obtenue est filtrée à l'aide d'une seringue et d'un filtre seringue 0,45µm en PTFE à usage unique. 100 µl de la solution filtrée est injecté dans le système chromatographique conditionné à 1ml/min et 35°C.

Les résultats de Mw sont fournis par intégration des pics chromatographiques détectés par détecteur RI au-delà d'une valeur de 2000g/mol. La Mw est calculée à partir d'une calibration réalisée à l'aide de polystyrènes étalons.

### Mesure de la viscosité Mooney (ou plasticité Mooney) :

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre). Plus la valeur de Mooney est basse, plus la viscosité avant cuisson est faible et meilleure est la processabilité de la composition.

### Mesure de la fraction massique de noir de carbone :

La mesure de la fraction massique de noir de carbone est faite par une analyse thermogravimétrique (ATG) selon la norme NF T-46-07, sur un appareil de la société Mettler Toledo modèle « TGA/DSC1 ». Environ 20g d'échantillon est introduit dans l'analyseur thermique, puis soumis à un programme thermique de 25 à 600°C sous atmosphère inerte (phase pyrolysable) puis de 400 à 750°C sous atmosphère oxydante (phase oxydable). La masse de l'échantillon est mesurée en continu tout au long du programme thermique.Le taux de noir correspond à la perte de masse mesurée lors de la phase oxydable rapportée à la masse d'échantillon initiale.

### Détermination des élastomères dans la composition de la poudrette

On utilise une caractérisation par RMN HR-MAS de la microstructure des élastomères en mélange vulcanisé (poudrettes)

Environ 40 mg d'échantillon sont insérés dans un rotor de 4 mm de diamètre et 92 µL de volume, puis gonflés avec quelques gouttes de chloroforme deutéré (CDCl3).

L'identification et la quantification des motifs présents dans l'échantillon se fait à l'aide d'expériences de Résonance Magnétique Nucléaire 1H et 13C à une dimension. L'ensemble des données est enregistré dans un champ magnétique de 11,7 T avec un spectromètre Bruker Avance III HD équipé d'une sonde HR-MAS 4 mm (High Resolution - Magic Angle Spinning). Les expériences sont acquises en rotation à l'angle magique avec une fréquence de rotation de 4 kHz. Les axes des déplacements chimiques isotropes sont référencés à partir du signal du CHCl3 à 7,20 ppm en proton et du signal du CDCl3 à 77.0 ppm en carbone-13.

Les spectres 1D 1H sont enregistrés avec une expérience simple impulsion d'une durée correspondante à un angle de basculement de 30°, le nombre de répétitions est de 64 scans avec un délai de recyclage de 3 secondes.

Les spectres 1D et 13C sont enregistrés avec une expérience simple impulsion d'une durée correspondante à un angle de basculement de 90° et un découplage des 1H durant l'acquisition, le nombre de répétitions est de 1024 scans avec un délai de recyclage de 8 secondes.

L'identification des motifs s'effectue sur le spectre 13C, le spectre 1H servant à détecter la présence de motifs présents en faible quantité (< 5 %massique).

Les principaux motifs détectés sont les suivants : Isoprène (1,4 cis - 1,4 trans - 1,2 et 3,4), Butadiène (1,2 - 1,4 cis et 1,4 trans), Styrène, et Isobutylène.

Chaque motif présent dans l'échantillon possède une raie de résonnance 13C qui lui est propre (ex : δ13C isoprène 1-4cis =23.4ppm), dont l'intensité est directement reliée à la quantité de noyaux présents dans l'échantillon.

Les quantifications ont été effectuées à partir de l'intégration des spectres RMN 13C à l'aide du logiciel TOPSPIN, en intégrant le signal caractéristique de chacun des motifs observés.

Les résultats bruts obtenus en pourcentage molaire sont pondérés par la masse molaire de chacun des motifs afin d'obtenir un pourcentage massique.

Dans les exemples, les compositions de caoutchouc sont caractérisées avant et/ou après cuisson comme indiqué ci-après.

### Mesure de l'allongement rupture à 60°C:

La mesure est faite par des essais de traction, qui permettent de déterminer les contraintes d'élasticité et les propriétés à la rupture. Sauf indication différente, ils sont effectués conformément à la norme française NF T 46-002 de septembre 1988. Toutes ces mesures de traction sont effectuées dans les conditions normales de température à 60°C, et d'hygrométrie (50±10% d'humidité relative). On mesure en première élongation le module sécant nominal (ou contraintes apparentes, en MPa) à 100% d'allongement noté MA100. On mesure également les allongements à la rupture (en %).

Les résultats sont donnés en base 100 pour faciliter la lecture et la compréhension des résultats ; c'est-à-dire qu'on affecte arbitrairement la valeur 100 au meilleur témoin, pour comparer ensuite les valeurs des différentes solutions testées. De cette façon, une valeur plus basse d'allongement à la rupture représente une diminution de la performance en résistance à la déchirure (c'est-à-dire une diminution de l'allongement à la rupture) tandis qu'une valeur plus élevée représente une meilleure performance. De même, une valeur plus basse de MA100 représente une diminution de la performance en usure et en comportement du véhicule (c'est-à-dire une diminution du module) tandis qu'une valeur plus élevée représente une meilleure performance.

### III-2 Préparation des poudrettes

Pour les exemples de réalisation, les poudrettes utilisées sont issue du broyage d'une composition de bande de roulement de pneumatiques de Poids-lourds telle que présentée au tableau 1 ci-dessous. Le broyage est effectué sur un équipement CUM150 de la société Netzsch utilisant des diamètres de picots de 3mm, une vitesse de rotation du broyeur de 15000 rpm. Le débit de matière est de l'ordre de 50kg/h et le refroidissement de l'installation est réalisé afin de garantir une température de gaz en sortie du broyeur de -60°C.

**Tableau 1**

| Composition de poudrette (pce) | P1 | P2 | P3 |
|---|---|---|---|
| NR (1) | 80 | 100 | 100 |
| BR (2) | 20 | 0 | 0 |
| Noir de carbone (3) | 48 | 48 | 57 |
| Noir de carbone (3) (% massique) | 30 | 30 | 34 |
| Antioxydant (4) | 3 | 3 | 1,5 |
| Acide stéarique (5) | 2 | 2 | 2 |
| Oxyde de zinc (6) | 3 | 3 | 3 |
| Accélérateur (7) | 1 | 1 | 1 |
| Soufre | 1,5 | 1,5 | 1,5 |
| Extrait acétonique | 4,6% | 4,6% | 4,6% |
| Extrait Chloroformique | 6,3% | 6,3% | 6,3% |
| Mw (Extrait Chloroformique) | 7000 g/mol | 7000 g/mol | 7000 g/mol |
| D50 | 155µm | 155µm | 155µm |

| | | | |
|---|---|---|---|
| (1) NR : Caoutchouc naturel (2) BR : polybutadiène « CB24 » de la société Lanxess ; 96% de 1,4-cis ; Tg = -107°C (3) Noir de carbone Grade ASTM N234 ou N375 (4) N-(1,3-diméthylbutyl)-N'-phényl-p-phénylènediamine (Santoflex 6-PPD) de la société Flexsys (5) Stéarine « Pristerene 4931 » de la société Uniqema (6) Oxyde de zinc de grade industriel - société Umicore (7) N-cyclohexyl-2-benzothiazol-sulfénamide (« Santocure CBS » de la société Flexsys) | | | |

### III-3 Compositions de caoutchouc

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C). Les poudrettes peuvent être introduites au mélangeur interne ou externe.

Les exemples présentés dans le tableau 2 ont pour objet de comparer les différentes propriétés de caoutchouterie de compositions témoin (T1 et T2) aux propriétés d'une composition conforme à l'invention (C). Les propriétés sont présentées au tableau 3.

**Tableau 2**

| | T1 | T2 | C |
|---|---|---|---|
| NR (1) | 80 | 80 | 80 |
| BR (2) | 20 | 20 | 20 |
| Noir de carbone (3) | 48 | 48 | 48 |
| Poudrette P1 | 40 | 0 | 0 |
| Poudrette P2 | 0 | 40 | 0 |
| Poudrette P3 | 0 | 0 | 40 |
| Antioxydant (4) | 3 | 3 | 3 |
| Acide stéarique (5) | 2 | 2 | 2 |
| Oxyde de zinc (6) | 3 | 3 | 3 |
| Accélérateur (7) | 1 | 1 | 1 |
| Soufre | 1,5 | 1,5 | 1,5 |

| | | | |
|---|---|---|---|
| (1) NR : Caoutchouc naturel (2) BR : polybutadiène « CB24 » de la société Lanxess ; 96% de 1,4-cis ; Tg = -107°C (3) Noir de carbone Grade ASTM N234 (4) N-(1,3-diméthylbutyl)-N'-phényl-p-phénylènediamine (Santoflex 6-PPD) de la société Flexsys (5) Stéarine « Pristerene 4931 » de la société Uniqema (6) Oxyde de zinc de grade industriel - société Umicore (7) N-cyclohexyl-2-benzothiazol-sulfénamide (« Santocure CBS » de la société Flexsys) | | | |

**Tableau 3**

| | T1 | T2 | C |
|---|---|---|---|
| MA100 (base 100) | 100 | 100 | 110 |
| Allongement Rupture à 60°C (base 100) | 100 | 101 | 105 |

Par rapport aux compositions témoin T1 et T2, on note que la composition C conforme à l'invention permet d'améliorer le compromis de performance entre la résistance à l'usure et la résistance à la déchirure comme montré par les mesures d'allongement rupture à 60°C.

## Revendications

1. Composition de caoutchouc à base d'au moins un élastomère, une charge renforçante, et un système de réticulation et une poudrette de caoutchouc, ladite poudrette présentant un taux d'élastomère isoprénique supérieur à 80 pce dans la composition de la poudrette, et la poudrette de caoutchouc présentant une fraction massique de noir de carbone allant de 31 à 35%.

2. Composition selon la revendication 1 dans laquelle la poudrette de caoutchouc présente un taux d'élastomère isoprénique compris dans un domaine allant de 85 à 100 pce, de préférence de 90 à 100 pce dans la composition de la poudrette.

3. Composition selon l'une quelconque des revendications précédentes dans laquelle l'élastomère isoprénique dans la poudrette de caoutchouc est choisi dans le groupe constitué par les polyisoprènes de synthèse, les caoutchoucs naturels et leurs mélanges.

4. Composition selon l'une quelconque des revendications précédentes dans laquelle la poudrette de caoutchouc est présente à un taux allant de 5 à 40% massique, de préférence de 10 à 30% massique.

5. Composition selon l'une quelconque des revendications précédentes dans laquelle la poudrette de caoutchouc est présente à un taux allant de 5 à 100 pce, de préférence de 10 à 90 pce.

6. Composition selon l'une quelconque des revendications précédentes dans laquelle la poudrette de caoutchouc présente un extrait acétonique compris entre 3 et 30 % massique, plus préférentiellement compris dans un domaine allant de 5 à 25 % massique.

7. Composition selon l'une quelconque des revendications précédentes dans laquelle la poudrette de caoutchouc présente un extrait chloroformique compris entre 5 et 85 % massique, plus préférentiellement compris dans un domaine allant de 5 à 50 % massique.

8. Composition selon l'une quelconque des revendications précédentes dans laquelle la poudrette de caoutchouc n'a pas subi de modification par traitement thermique et/ou mécanique, et/ou biologique et/ou chimique.

9. Composition selon la revendication 8 dans laquelle la poudrette de caoutchouc présente un extrait acétonique compris entre 3 et 15 % massique, plus préférentiellement compris dans un domaine allant de 3 à 10 % massique.

10. Composition selon l'une quelconque des revendications 8 ou 9 dans laquelle la poudrette de caoutchouc présente un extrait chloroformique compris entre 3 et 20 % massique, plus préférentiellement compris dans un domaine allant de 5 à 15 % massique.

11. Composition selon l'une quelconque des revendications 8 à 10 dans laquelle la poudrette de caoutchouc présente un rapport de l'extrait chloroformique sur l'extrait acétonique, exprimés en pourcentage massique, inférieur à 1,5.

12. Composition selon l'une quelconque des revendications 8 à 11 dans laquelle la poudrette de caoutchouc présente un extrait chloroformique dont la masse moléculaire moyenne en masse est inférieure à 10000 g/mol, de préférence inférieure à 8000 g/mol.

13. Composition selon l'une quelconque des revendications 1 à 6 dans laquelle la poudrette de caoutchouc présente une morphologie modifiée par traitement thermique et/ou mécanique, et/ou biologique et/ou chimique.

14. Composition selon l'une quelconque des revendications précédentes dans laquelle l'élastomère comprend majoritairement un élastomère choisi dans le groupe constitué par les élastomères diéniques essentiellement insaturés.

15. Pneumatique comprenant une composition selon l'une quelconque des revendications 1 à 14.

## Patentansprüche

1. Kautschukzusammensetzung auf Basis von mindestens einem Elastomer, einem verstärkenden Füllstoff und einem Vernetzungssystem und einem Kautschukgranulat, wobei das Granulat einen Gehalt an Isoprenelastomer von mehr als 80 phe in der Zusammensetzung des Granulats aufweist und das Kautschukgranulat einen Gewichtsanteil an Ruß im Bereich von 31 bis 35 % aufweist.

2. Zusammensetzung nach Anspruch 1, wobei das Kautschukgranulat einen Gehalt an Isoprenelastomer in einem Bereich von 85 bis 100 phe, vorzugsweise von 90 bis 100 phe, in der Zusammensetzung des Granulats aufweist.

3. Zusammensetzung nach einem der vorhergehenden Ansprüche, wobei das Isoprenelastomer in dem Kautschukgranulat aus der Gruppe bestehend aus synthetischen Polyisoprenen, Naturkautschuk und Mischungen davon ausgewählt ist.

4. Zusammensetzung nach einem der vorhergehenden Ansprüche, wobei das Kautschukgranulat in einem Gehalt im Bereich von 5 bis 40 Gew.-%, vorzugsweise 10 bis 30 Gew.-%, vorliegt.

5. Zusammensetzung nach einem der vorhergehenden Ansprüche, wobei das Kautschukgranulat in einem Gehalt von 5 bis 100 phe, vorzugsweise von 10 bis 90 phe, vorliegt.

6. Zusammensetzung nach einem der vorhergehenden Ansprüche, wobei das Kautschukgranulat einen Aceton-Extrakt zwischen 3 und 30 Gew.-%, weiter bevorzugt in einem Bereich von 5 bis 25 Gew.-%, aufweist.

7. Zusammensetzung nach einem der vorhergehenden Ansprüche, wobei das Kautschukgranulat einen Chloroform-Extrakt zwischen 5 und 85 Gew.-%, weiter bevorzugt in einem Bereich von 5 bis 50 Gew.-%, aufweist.

8. Zusammensetzung nach einem der vorhergehenden Ansprüche, wobei das Kautschukgranulat keiner Modifizierung durch thermische und/oder mechanische und/oder biologische und/oder chemische Behandlung unterworfen wurde.

9. Zusammensetzung nach Anspruch 8, wobei das Kautschukgranulat einen Aceton-Extrakt zwischen 3 und 15 Gew.-%, weiter bevorzugt in einem Bereich von 3 bis 10 Gew.-%, aufweist.

10. Zusammensetzung nach Anspruch 8 oder 9, wobei das Kautschukgranulat einen Chloroform-Extrakt zwischen 3 und 20 Gew.-%, weiter bevorzugt in einem Bereich von 5 bis 15 Gew.-%, aufweist.

11. Zusammensetzung nach einem der Ansprüche 8 bis 10, wobei das Kautschukgranulat ein Verhältnis von Chloroform-Extrakt zu Aceton-Extrakt, ausgedrückt in Gewichtsprozent, von weniger als 1,5 aufweist.

12. Zusammensetzung nach einem der Ansprüche 8 bis 11, wobei das Kautschukgranulat einen Chloroform-Extrakt mit einem gewichtsmittleren Molekulargewicht von weniger als 10.000 g/mol, vorzugsweise weniger als 8000 g/mol, aufweist.

13. Zusammensetzung nach einem der Ansprüche 1 bis 6, wobei das Kautschukgranulat eine durch thermische und/oder mechanische und/oder biologische und/oder chemische Behandlung modifizierte Morphologie aufweist.

14. Zusammensetzung nach einem der vorhergehenden Ansprüche, wobei das Elastomer hauptsächlich ein Elastomer aus der Gruppe bestehend aus im Wesentlichen ungesättigten Dienelastomeren umfasst.

15. Reifen, umfassend eine Zusammensetzung nach einem der Ansprüche 1 bis 14.

## Claims

1. Rubber composition based on at least an elastomer, a reinforcing filler, a crosslinking system and a crumb rubber, the said crumb exhibiting a content of isoprene elastomer of greater than 80 phr in the composition of the crumb and the crumb rubber exhibiting a fraction by weight of carbon black ranging from 31% to 35%.

2. Composition according to Claim 1, in which the crumb rubber exhibits a content of isoprene elastomer within a range extending from 85 to 100 phr, preferably from 90 to 100 phr, in the composition of the crumb.

3. Composition according to either one of the preceding claims, in which the isoprene elastomer in the crumb rubber is selected from the group consisting of synthetic polyisoprenes, natural rubbers and their mixtures.

4. Composition according to any one of the preceding claims, in which the crumb rubber is present at a content ranging from 5% to 40% by weight, preferably from 10% to 30% by weight.

5. Composition according to any one of the preceding claims, in which the crumb rubber is present at a content ranging from 5 to 100 phr, preferably from 10 to 90 phr.

6. Composition according to any one of the preceding claims, in which the crumb rubber exhibits an acetone extract of between 3% and 30% by weight, more preferably within a range extending from 5% to 25% by weight.

7. Composition according to any one of the preceding claims, in which the crumb rubber exhibits a chloroform extract of between 5% and 85% by weight, more preferably within a range extending from 5% to 50% by weight.

8. Composition according to any one of the preceding claims, in which the crumb rubber has not undergone modification by thermal and/or mechanical and/or biological and/or chemical treatment.

9. Composition according to Claim 8, in which the crumb rubber exhibits an acetone extract of between 3% and 15% by weight, more preferably within a range extending from 3% to 10% by weight.

10. Composition according to either one of Claims 8 and 9, in which the crumb rubber exhibits a chloroform extract of between 3% and 20% by weight, more preferably within a range extending from 5% to 15% by weight.

11. Composition according to any one of Claims 8 to 10, in which the crumb rubber exhibits a ratio of the chloroform extract to the acetone extract, expressed as percentage by weight, of less than 1.5.

12. Composition according to any one of Claims 8 to 11, in which the crumb rubber exhibits a chloroform extract, the weight-average molecular weight of which is less than 10 000 g/mol, preferably less than 8000 g/mol.

13. Composition according to any one of Claims 1 to 6, in which the crumb rubber exhibits a morphology modified by thermal and/or mechanical and/or biological and/or chemical treatment.

14. Composition according to any one of the preceding claims, in which the elastomer predominantly comprises an elastomer selected from the group consisting of essentially unsaturated diene elastomers.

15. Tyre comprising a composition according to any one of Claims 1 to 14.
